# EUROPÄISCHE PATENTSCHRIFT

(11) **EP 0 905 830 B1**
(45) Veröffentlichungstag und Bekanntmachung des Hinweises auf die Patenterteilung: **03.05.2006**
(21) Anmeldenummer: 98117823.9
(22) Anmeldetag: 19.09.1998
(51) Int. Cl.: H01R 31/06, G02B 6/38, H01R 9/24, H01R 13/59, G02B 6/42

(54) **Anschlussvorrichtung mit Steckanschlüssen**
Connection device having plug-in connections
Dispositif de raccordement avec des raccordements à fiches

(30) Priorität: 26.09.1997 DE 29717271 U
(43) Veröffentlichungstag der Anmeldung: 31.03.1999
(73) Patentinhaber: PHOENIX CONTACT GmbH & Co. Kg, 32825 Blomberg (DE)
(72) Erfinder: Behr,Thorsten,Dipl.-Ing., 32805 Horn-Bad Meinberg (DE); Fürhoff,Achim,Dipl.-Ing., 32278 Kirchlengern (DE); Berg,Roland, 37671 Höxter (DE); Grewe,Harald,Dipl.-Ing., 33175 Bad Lippspringe (DE); Brand,Jürgen,Dipl.-Ing., 32760 Detmold (DE); Metzger,Andreas, 32765 Detmold (DE); Hannibal,Frank,Dipl.-Ing., 32825 Blomberg (DE); Oster,Viktor,Dipl.-Ing., 32825 Blomberg (DE); Neugebauer,Werner,Dipl.-Ing., 32805 Horn-Bad Meinberg (DE); Pape,Andreas,Dipl.-Phys., 33034 Brakel (DE); Nordhoff,Andreas,Dipl.-Ing., 32805 Horn-Bad Meinberg (DE); Quardt,Dirk,Dipl.-Ing., 32816 Schieder-Schwalenberg (DE); Rattay,Thomas,Dipl.-Ing., 33604 Bielefeld (DE)
(74) Vertreter: Elbertzhagen, Otto

(56) Entgegenhaltungen:
- DE-A- 19 643 072
- DE-C- 4 408 029
- DE-U- 8 711 780
- US-A- 4 744 775
- US-A- 5 285 511
- PATENT ABSTRACTS OF JAPAN vol. 015, no. 236 (E-1078), 18. Juni 1991 (1991-06-18) & JP 03 071581 A (HITACHI LTD;OTHERS: 01), 27. März 1991 (1991-03-27)
- PATENT ABSTRACTS OF JAPAN vol. 016, no. 188 (E-1198), 7. Mai 1992 (1992-05-07) & JP 04 023622 A (NEC CORP), 28. Januar 1992 (1992-01-28)

## Beschreibung

Die Erfindung bezieht sich auf eine Anschlußvorrichtung für eine Mehrzahl von elektrischen Leitern und/oder Lichtwellenleitern insbesondere eines Bussystems mit einem Gehäuse und daran anbringbaren Steckanschlüssen, die an einer der Seiten oder an einander gegenüberliegenden Seiten des in der Grundform rechteckigen oder quadratischen Gehäuses angeordnet und im Gehäuseinnern mittels entsprechender elektrischer Kontakte bzw. optischer Übergänge mit elektrischen, elektronischen oder photoelektrischen Bauteilen verbunden sind.

Anschlußvorrichtungen dieser Art sind aus dem Katalog "PHOENIX CONTACT; II INTERBUS; '93/94" bekannt. Bei diesen Anschlußvorrichtungen sind die Steckanschlüsse an der betreffenden Gehäuseseite fest installiert. In der Regel haben solche Gehäuse die Form eines Quaders oder eines Parallelepipeds, wobei an den Anschlußseiten nach außen vorstehende Gehäuseansätze fest angeformt sind, die ein Gewinde tragen, auf die eine den betreffenden Leiter klemmende Schraubkappe aufgesetzt werden kann, was als sogenannte PG-Verschraubung bekannt ist. Für verschiedene Anschlußsysteme, die Leitungsein- bzw. -abgänge entweder an einer Gehäuselängsseite oder an einer Gehäusestirnseite erfordern, hat man bislang daran speziell angepaßte Gehäuseausbildungen vorsehen müssen.

Der Erfindung liegt deshalb die Aufgabe zugrunde, eine Anschlußvorrichtung der eingangs genannten Art zu schaffen, die am Gehäuse wählbare Anschlußmöglichkeiten bietet.

Diese Aufgabe wird bei einer Anschlußvorrichtung der gattungsbildenden Art durch die Merkmale im kennzeichnenden Teil des Anspruches gelöst, daß die Steckanschlüsse bezogen auf ihre Steckrichtung um 90 Grad über Eck an dem Gehäuse bei elektrischer oder lichtübertragender Kontaktierung an gleicher Stelle umsetzbar sind.

Für die erfindungsgemäße Anschlußvorrichtung ist wesentlich, daß der Anwender wählen kann, ob er die Steckanschlüsse an der Längsseite oder an der Stirnseite des betreffenden Gehäuses anordnet, wobei in den beiden jeweiligen, um 90 Grad zueinander versetzten Positionen die Kontaktierung bzw. der Eingriff der Kontakte an den Steckanschlüssen und der gehäuseseitigen Gegenkontakte stets an derselben Stelle erfolgt, womit eine fehlerhafte Kontaktierung ausgeschlossen ist.

In vorteilhafter Ausgestaltung nach der Erfindung sind mehrere der Steckanschlüsse zu einem Modul zusammengefaßt, wobei ein oder mehrere Module an dem Gehäuse der Anschlußvorrichtung anschließbar sind und daran die beiden zueinander um 90 Grad versetzten Lagen einnehmen können. Besonders zweckmäßige Ausgestaltungsmerkmale hinsichtlich der mechanischen Verbindung der Module mit dem Gehäuse und der Kontaktierung einer Mehrzahl vorhandener Kontakte ergeben sich aus den Unteransprüchen und aus der nachstehenden Beschreibung.

Die Erfindung wird nachfolgend anhand der Zeichnung an einem Ausführungsbeispiel noch näher erläutert. Dabei zeigen:
- Fig. 1: eine perspektivische, schräg von oben gesehene Darstellung einer Anschlußvorrichtung mit davon abgesprengt dargestellten Modulen, die jweils eine Mehrzahl von Steckanschlüssen aufweisen,
- Fig. 2: eine der Fig. 1 entsprechende Darstellung der Anschlußvorrichtung mit den an das Gehäuse angesetzten Modulen bei stirnseitiger Lage der Steckanschlüsse,
- Fig. 3: eine der Fig. 1 entsprechende Darstellung der Anschlußvorrichtung mit an das Gehäuse angesetzten Modulen bei längsseitiger Lage der Steckanschlüsse,
- Fig. 4: eine perspektivische Innenansicht der Anschlußvorrichtung nach den Fig. 1 - 3 im Bereich der Kontaktierung der Steckanschlüsse,
- Fig. 5: eine perspektivische Darstellung der miteinander kontaktierenden elektrischen Kontakte der Steckanschlüsse und der gehäuseseitigen Gegenkontakte bei stirnseitiger Anordnung der Steckanschlüsse am Gehäuse,
- Fig. 6: eine perspektivische Darstellung der Kontakte der Steckanschlüsse und der gehäuseseitigen Gegenkontakte gemäß Fig. 5 jedoch bei längsseitiger Anordnung der Steckanschlüsse am Gehäuse und
- Fig. 7: eine detaillierte perspektivische Darstellung des Lichtwellenleiteranschlusses der Module der Anschlußvorichtung gemäß den vorstehenden Figuren.

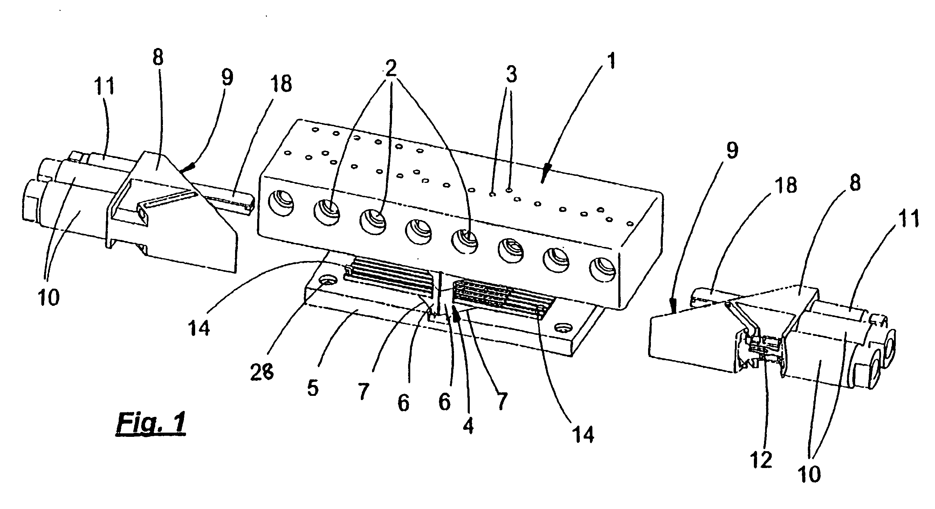

Im einzelnen zeigt Fig. 1 ein Gehäuse 1, welches eine länglich rechteckige Grundform hat und deshalb die Gestalt eines Parallelepipeds aufweist. An einer der Längsseiten des Gehäuses 1 sind Öffnungen 2 vorhanden, die der Aufnahme nicht näher dargestellter Steck- oder Schraubanschlüsse dienen, wie sie bei einer Maschinensteuerung für den Anschluß von zu Aktoren oder Sensoren führenden Leitungen notwendig sind. An der Oberseite des Gehäuses finden sich optische Anzeigeeinrichtungen, wie Leuchtdioden 3, mit denen bestimmte Betriebs- oder Kontrollzustände signalisiert werden können. Vornehmlich dient die gesamte Anschlußvorrichtung zur Verbindung mit einem oder mehreren Bussystemen, wozu weitere Anschlüsse vorgesehen sind, auf die nachstehend noch eingegangen werden wird.

Unterseitig hat das Gehäuse 1 einen angesetzten Sockel 4, der eine im Querschnitt dreieckige, prismatische Gestalt hat, wodurch im rechten Winkel zueinanderstehende Anschlagflächen 6 an dem Sockel 4 gebildet sind. Diese Anschlagflächen 6 verlaufen parallel zu Diagonalebenen des Gehäuses 1 und stehen senkrecht auf der Gehäuseunterseite. Mit dem Sockel 4 ist das Gehäuse 1 auf eine Untersetzplatte 5 aufsetzbar, die zugleich zur Befestigung dienen kann, deshalb sind in dieser Untersetzplatte 5 Durchgangslöcher 28 vorgesehen. Die Untersetzplatte 5 hat in Gestalt von Stufen eine Aufnahmekontur 7, um die Unterseite des Sockels 6 am Gehäuse 1 formschlüssig aufnehmen zu können.

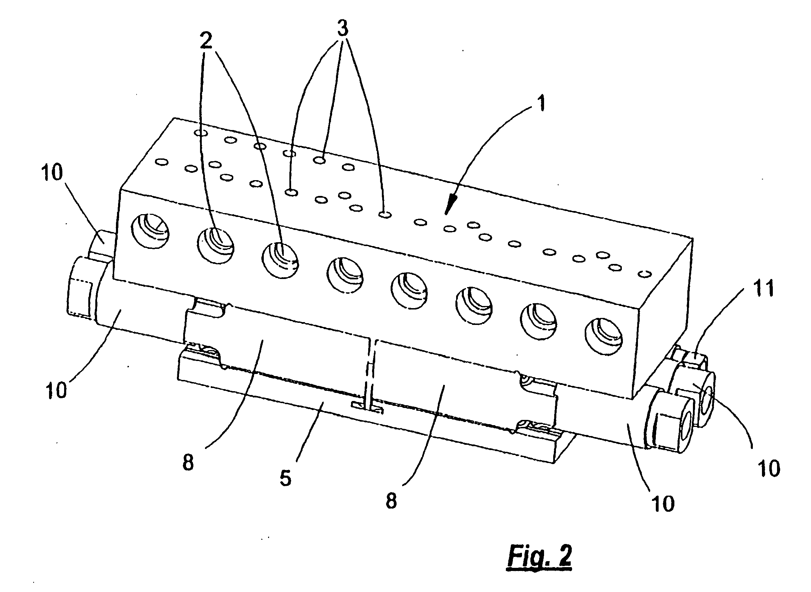

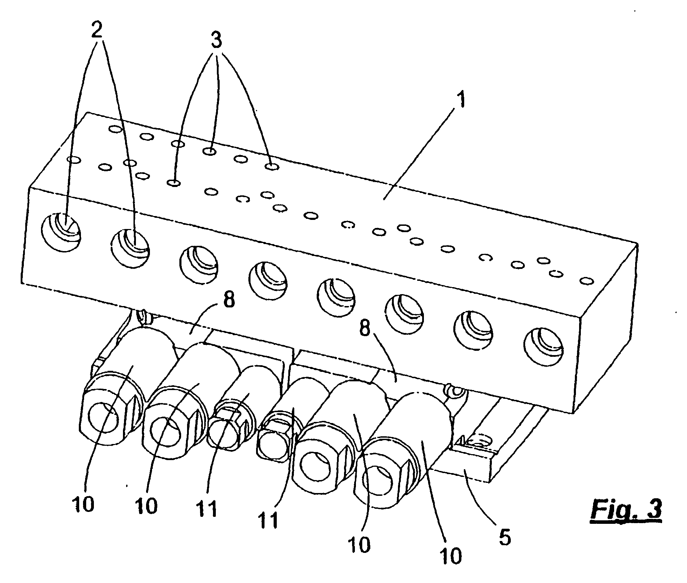

Zwischen der Oberseite der Untersetzplatte 5 und der Unterseite des Gehäuses 1 ist ein Zwischenraum gebildet, der zum Ansetzen von Modulen 8 dient. An den Modulen 8 sind mehrere Steckanschlüsse 10 und 11 zusammengefaßt, deren Längs- oder Steckrichtung in an das Gehäuse 1 angefügter Anordnung wahlweise in dessen Längsrichtung oder in dessen Querrichtung angeordnet werden kann. Dazu haben die Module 8 eine geschrägte Anschlagfläche 9, die zur Längs- oder Steckrichtung der Steckanschlüsse 10 und 11 unter einem Winkel von 45 Grad verläuft und im übrigen aufrecht steht, also in an das Gehäuse 1 angefügter Anordnung zu dessen Unterseite und zur Oberseite der Untersetzplatte 5 senkrecht steht. Folglich kann das betreffende Modul 8 mit seiner Anschlagfläche 9 in der in Fig. 1 dargestellten Position zur Anlage an der Anschlagfläche 6 am Gehäusesockel 4 gebracht werden, gleiches ist aber auch dann möglich, wenn das Modul 8 um eine Achse, die parallel zur Längs- oder Steckrichtung der Anschlüsse 10 und 11 liegt, um 180 Grad gedreht wird, wonach dann in der an den Gehäusesockel 4 angefügter Anordnung des Moduls 8 die Längs- bzw. Steckrichtung der Steckanschlüsse 10 und 11 rechtwinklig zu der in Fig. 1 wiedergegebenen Lage verläuft, was sich aus den nachfolgend noch erläuterten Figuren 2 und 3 ergibt.

Die Module 8 weisen im Innern zu den Steckanschlüssen 10 gehörende elektrische Kontakte 12 auf, die mit Gegenkontakten 14 zusammenwirken, die sich in dem Raum zwischen der Unterseite des Gehäuses 1 und der Oberseite der Untersetzplatte 5 befinden. Die weiteren Steckanschlüsse 11 der Module 8 dienen der Verbindung mit Lichtwellenleitern, deren Fortsetzung im Modul 8 ebenfalls über Lichtwellenleiter 18 erfolgt.

Fig. 2 veranschaulicht die zusammengefügte Anschlußvorrichtung, wobei hier die Module mit ihren Steckanschlüssen 10 und 11 in Längsrichtung des Gehäuses 1 an dessen Stirnseiten angeordnet sind. Die andere Wahlmöglichkeit für die Anordnung der Module zeigt Fig. 3. Hier sind die Module 8 derartig zwischen der Untersetzplatte 5 und dem Gehäuse 1 angesetzt, daß die Steckanschlüsse 10 und 11 mit ihren Längs- bzw. Steckrichtungen an der Längsseite des Gehäuses 1, also quer zu dessen Längsrichtung liegen. Man erkennt in Fig. 3 auch, daß die Module 8 gegenüber der Anordnung gemäß Fig. 2 auf dem Kopf stehen. Unabhängig von der Art der beiden um 90 Grad über Eck des Gehäuses 1 möglichen Anschlußpositionen der Module 8 erfolgt die elektrische wie auch die optische Kontaktierung immer an der gleichen Stelle ohne jegliche Vertauschung, was aus den nachstehend erläuterten Figuren deutlich wird.

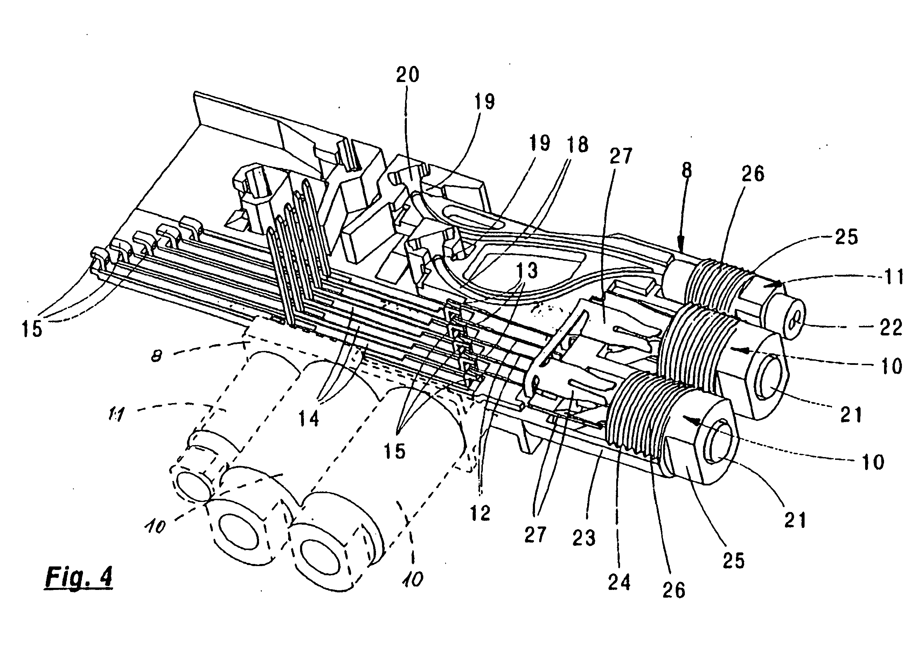

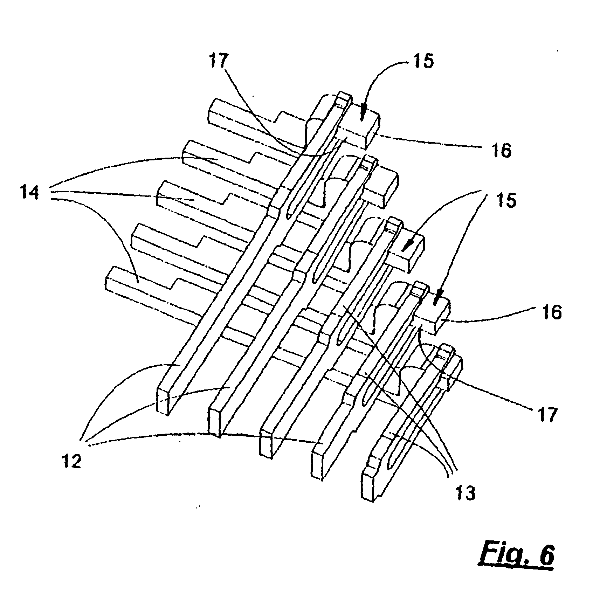

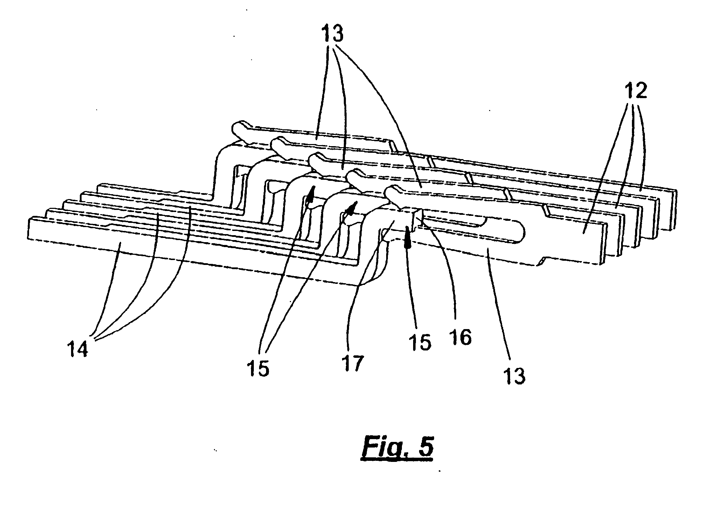

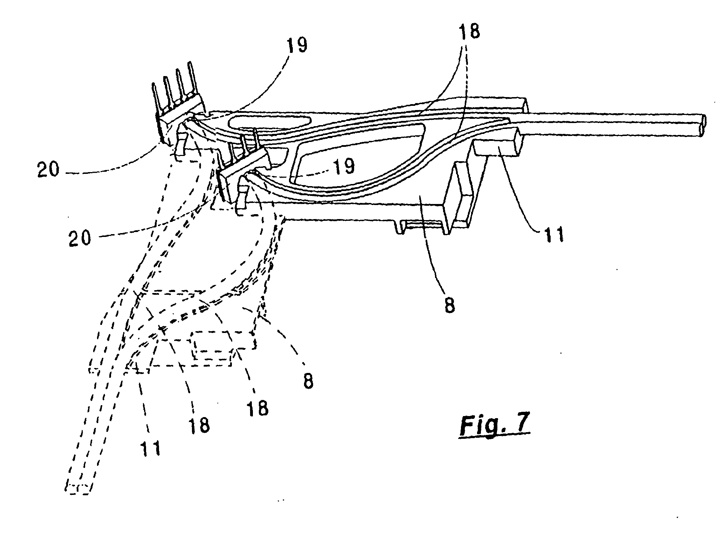

Aus Fig. 4 geht hervor, daß die Steckanschlüsse 10 eines Moduls 8 für den Anschluß elektrischer Leitungen 21 vorgesehen sind, deren einzelne Leiter mit axial ausgerichteten Schneidklemmen 27 in Kontakt stehen. Diese Schneidklemmen 27 setzen sich in den Kontakten 12 fort, die auch zusammen mit den gehäuseseitigen Gegenkontakten 14 ohne weiteres Beiwerk in den Figuren 5 und 6 dargestellt sind. Die Kontakte 13 sind harfenähnlich in einer Ebene parallel nebeneinander angeordnet und unterschiedlich lang, wobei die Längen der Kontakte 13 gleichmäßig gestuft sind. Die Kontakte 12 haben Gabelenden 13, mit denen sie Kontaktzungen 15 der gehäuseseitigen Gegenkontakte 14 übergreifen. Das geschieht in derjenigen Lage, in der die Steckanschlüsse 10 in Längsrichtung des Gehäuses 1 liegen, in derjenigen Weise, die in Fig. 5 wiedergegeben ist. Hier werden die freistehend angeordneten Kontaktzungen 15 der Gegenkontakte 14 von ihren Stirnseiten 16 her von den Gabelenden 13 der zu den Steckanschlüssen 10 zugehörigen Kontakte 12 übergriffen. In der dazu senkrechten, kopfstehenden Anordnung der Module 8, die in Fig. 3 dargestellt ist, erfolgt der Übergriff der Gabelenden 13 der zu den Steckanschlüssen 10 zugehörigen Kontakte 12 über die Kontaktzungen 15 der Gegenkontakte 14 in der in Fig. 6 wiedergegebenen Weise. Hier werden die freistehenden Kontaktzungen 15 der gehäuseseitigen Gegenkontakte 14 von ihren Längsseiten 17 her übergriffen. Damit hierbei die Kontakte 12 und die Gegenkontakte 14 nicht miteinander kollidieren, sind sie in miteinander parallelen, benachbarten Ebenen angeordnet, wobei die Kontaktzungen 15 an den Enden der Gegenkontakte in die Ebene der Kontakte 12 bzw. deren Gabelenden 13 abgekröpft sind. Ebenso wie die zu den Steckanschlüssen 10 zugehörigen. Kontakte 12 sind auch die gehäuseseitigen Gegenkontakte 14 in zu den Kontakten 12 entgegengesetzte Abstufung ungleich lang, wobei die Stufung entlang einer 45 Grad-Linie bezogen auf die Längsrichtung der Kontakte 12 bzw. der Gegenkontakte 14 jeweils verläuft. Dadurch ist es möglich, daß bei der in Fig. 5 dargestellten Längsausrichtung der Kontakte 12 und der Gegenkontakte 14 miteinander der Kontakteingriff an derselben Stelle erfolgt wie bei der in Fig. 6 wiedergegebenen Querausrichtung der Kontakte 12 relativ zu den Gegenkontakten 14, wobei hier die Kontakte 12 um 180 Grad gedreht kopfstehend angeordnet sind. Dadurch paßt sich die Stufung der Längen der einzelnen Kontakte 12 wiederum der Längenstufung der gehäuseseitigen Gegenkontakte 14 an. Grundsätzlich können in vertauschter Ausführung auch die Gabelenden an den gehäuseseitigen Gegenkontakten 14 und die endseitigen Zungen an den Kontakten 12 der Steckanschlüsse 10 angeordnet sein.

In analoger Weise wird auch die optische Kontaktierung der Lichtleiter 18 vorgenommen, die dem Steckanschluß 11 der Module 8 zugeordnet sind, welcher für den Anschluß eines Lichtleiterkabels 22 vorgesehen ist. Dies veranschaulicht im einzelnen Fig. 7. Die beiden Lichtleiter 18 stehen mit ihren sendenden bzw. empfangenden Stirnenden 19 unmittelbar einer optischen Linse einer photoelektrischen Empfangs- bzw. Sendeeinrichtung 20 gegenüber, die fest am Gehäuse 1 installiert ist. Die Empfangs- bzw. Sendeeinrichtung 20 mit ihrer optischen Linse und die Lichtleiter 18 mit ihren Stirnenden 19 sind ebenfalls in Richtung einer Diagonalebene unter einem Winkel von 45 Grad relativ zur Steck- bzw. Längsrichtung des Steckanschlusses 11 angeordnet, womit auch hier bei um 90 Grad versetzter Lage des Moduls 8 in kopfstehender Anordnung sich die Stirnseiten 19 der Lichtwellenleiter 18 und die optischen Linsen der Empfangs- bzw. Sendeeinrichtungen 20 in gleicher Weise einander gegenüberstehen. Auch bei dem Lichtwellenleiteranschluß ist eine Kollisionsfreiheit dadurch sichergestellt, daß die beiden Empfangs- bzw. Sendeeinrichtungen 20 quer zu der erwähnten 45 Grad-Diagonalebene angeordnet sind und in Richtung dieser Ebene mit ihren optischen Linsen hintereinanderliegen, was entsprechend für die Stirnenden 19 der Lichtwellenleiter 18 gilt.

Fig. 4 zeigt noch eine weitere Besonderheit der Anschlußvorrichtung, für deren Module 8 eine niedrige Bauhöhe anzustreben ist. Die Einführung der elektrischen Leitungen 21 und des Lichtleiterkabels 22 erfolgt durch Schraubkappen 25 hindurch, mittels derer die Leitungen 21, 22 in üblicher Weise abgedichtet und zugentlastet verklemmt werden. Für das Einschrauben der Schraubkappen 25 haben die Module 8 Schraubansätze 23, die mit einem Innengewinde 24 versehen sind. Entsprechend weisen die Schraubkappen 25 ein Außengewinde 26 auf. Diese Gewindeausbildung ist für den genannten Zweck unüblich, denn bei bekannten Ausführungen haben die Schraubkappen Innengewinde, entsprechend sind die zugehörenden Gehäuseansätze mit einem Außengewinde ausgestattet.

## Patentansprüche

1. Anschlußvorrichtung für eine Mehrzahl von elektrischen Leitern (21) und/oder Lichtwellenleitern (22) insbesondere eines Bussystems mit einem in der Grundform rechteckigen oder quadratischen Gehäuse (1) und mit daran anbringbaren Steckanschlüssen (10, 11), die an einer der Seiten oder an einander gegenüberliegenden Seiten Gehäuses (1) angeordnet und im Gehäuseinnern mittels entsprechender elektrischer Kontakte (12-15) bzw. optischer Übergänge (19, 20) mit elektrischen, elektronischen oder photoelektrischen Bauteilen verbunden sind,
**dadurch gekennzeichnet,**
**daß** die Steckrichtung der Steckanschlüsse (10, 11) in Längsrichtung und in Querrichtung des Gehäuses (1) vorgesehen ist, daß die gehäuseseitigen elektrischen Gegenkontakte (14) und/oder die gehäuseseitige optische Sende- und Empfangseinrichtung (20) entlang einer unter einem Winkel von 45° zur Steckrichtung stehenden Diagonalebene des Gehäuses (1) angeordnet sind, daß sich die Steckanschlüsse (10, 11) an zumindest eindem Modul (8) befinden und ihre Kontakte (12) und/oder ihre sendenden und empfangenden Lichtleiterstirnenden (19) ebenfalls in Richtung einer unter einem Winkel von 45° zu ihrer Steckrichtung stehenden Diagonalebene angeordnet sind, wobei das Modul (8) mit den Steckanschlüssen (10, 11) bezogen auf die Steckrichtung um 90° über Eck am Gehäuse (1) umsetzbar ist und die elektrische und optische Kontaktierung nach dem Umsetzen an jeweils denselben Kontaktstellen bei um eine Achse parallel zur Steckrichtung um 180° gedrehter Lage des Moduls (8) erfolgt .

2. Anschlußvorrichtung nach Anspruch 1,
**dadurch gekennzeichnet,**
**daß** das Modul (8) und das Gehäuse (1) in der Kontaktlage aneinanderliegende Anschlagflächen (6, 9) haben, die aufrecht zur Steckrichtung der Steckanschlüsse (10, 11) unter einem Winkel von 45 Grad verlaufen.

3. Anschlußvorrichtung nach einem der Ansprüche 1 oder 2, **dadurch gekennzeichnet,**
**daß** das Gehäuse (1) auf eine Untersetzplatte (5) aufgesetzt ist, zwischen der und dem Gehäuse (1) ein oder mehrere Module gehalten sind.

4. Anschlußvorrichtung nach Anspruch 3,
**dadurch gekennzeichnet,**
**daß** das Gehäuse (1) einen unterseitigen Sockel (4) in Gestalt eines Prismas mit in oder parallel zu den Diagonalebenen des Gehäuses (1) verlaufenden Flächen als Anschlagflächen (6) für die Module (8) hat, wobei die Untersetzplatte (5) eine an die Grundfläche dieses Sockels (6) angepaßte Aufnahmekontur (7) an ihrer Oberseite aufweist.

5. Anschlußvorrichtung nach einem.der Ansprüche 1 - 4,
**dadurch gekennzeichnet,**
**daß** die Steckanschlüsse (10) der elektrischen Kontakte (12) mit in Steckrichtung offenen Gabelenden (13) und die Gegenkontakte (14) in oder am Gehäuse (1) freistehende Kontakt zungen (15) haben, wobei diese jeweils parallel zu einer der Gehäuseseiten angeordnet sind und von ihrer Stirnseite (16) oder von ihrer Längsseite (17) her von den Gabelenden (13) der Steckanschluß-Kontakte (12) übergreifbar sind.

6. Anschlußvorrichtung nach Anspruch 5,
**dadurch gekennzeichnet,**
**daß** die Kontakte (12) eines Steckanschlusses (10) oder die zweier oder mehrerer Steckanschlüsse (10) eines Moduls (8) harfenartig parallel nebeneinander in einer Ebene mit gestuften Längen und entsprechend die Gegenkontakte (14) am oder im Gehäuse (1) in entgegengesetzt gestufter Länge harfenartig parallel nebeneinander angeordnet sind, wobei die Kontakte (12) und die Gegenkontakte (14) in gefügter Anordnung in verschiedenen, parallelen Ebenen nebeneinander liegen und die Kontaktzungen (15) der Gegenkontakte (14) in die Ebene der Kontakte (12) bzw. deren Gabelenden (13) abgekröpft sind.

7. Anschlußvorrichtung nach einem der Ansprüche 1 - 6,
**dadurch gekennzeichnet,**
**daß** die Steckanschlüsse (11) für die Lichtübertragung zumindest einen zu dem jeweiligen optischen Übergang hinführenden Lichtwellenleiter (18) haben, der bezogen auf die Steckrichtung unter einem Winkel von 45 Grad mit seinem sendenden bzw. empfangenden Stirnende (19) einer im oder am Gehäuse (1) unter einem entsprechenden 45 Grad-Winkel installierten Empfangs- bzw. Sendeeinrichtung. (20) sowohl in einer ersten Kontaktlage als auch in einer dazu kopfstehenden, zweiten Kontaktlage an gleicher Stelle gegenübersteht.

8. Anschlußvorrichtung nach einem der Ansprüche 2 - 7,
**dadurch gekennzeichnet,**
**daß** die Steckanschlüsse (10, 11) oder das zumindest eine Modul (8) an der vom Gehäuse (1) abliegenden Seite Schraubansätze (23) mit einem Innengewinde (24) zur Aufnahme von Schraubkappen (25) mit einem Außengewinden (26) für die Leiterdurchführung und -klemmung haben.

## Revendications

1. Dispositif de raccordement pour plusieurs conducteurs électriques (21) et / ou de guides d'ondes optiques (22), en particulier pour un système de bus, avec un boîtier (1) dont la forme de base est rectangulaire ou carrée, et des raccords à fiches (10, 11) y rattachables, qui sont disposés sur l'un des côtés ou sur des côtés opposés du boîtier (1) et sont reliés, à l'intérieur du boîtier, à des éléments constitutifs électriques, électroniques ou photoélectriques au moyen de contacts électriques correspondants (12 - 15) respectivement de jonctions optiques (19, 20),
**caractérisé en ce que**
la direction d'insertion des raccords à fiches (10, 11) est prévue dans la direction longitudinale et dans la direction transversale du boîtier (1), que les contre-contacts électriques (14), côté boîtier, et / ou le système d'émission et de réception optique (20), côté boîtier, sont disposés le long d'un plan diagonal du boîtier (1) situé sous un angle de 45° par rapport à la direction d'insertion, que les raccords à fiches (10, 11) se trouvent à au moins un module (8) et que leurs contacts (12) et / ou leurs extrémités frontales, émettrices et réceptrices de guides d'ondes optiques (19) sont également disposées dans la direction d'un plan diagonal formant un angle de 45° par rapport à leur direction d'insertion, le module (8) avec les raccords à fiches (10, 11) pouvant être déplacé de 90° sur angle, par rapport à la direction d'insertion, sur le boîtier (1), et la mise en contact électrique et optique ayant lieu, après le déplacement, toujours aux mêmes points de contact dans une position du module (8) pivotée de 180° autour d'un axe, parallèlement à la direction d'insertion.

2. Dispositif de raccordement selon la revendication 1,
**caractérisé en ce que**
le module (8) et le boîtier (1) présentent, en position de contact, des surfaces de butée (6, 9) adjacentes qui s'étendent suivant un angle de 45° par rapport à la direction d'insertion des raccords à fiches (10, 11).

3. Dispositif de raccordement selon l'une des revendications 1 et 2,
**caractérisé en ce que**
le boîtier (1) est posé sur une plaque de support (5), un ou plusieurs modules étant maintenus entre celle-ci et le boîtier (1).

4. Dispositif de raccordement selon la revendication 3,
**caractérisé en ce que**
le boîtier (1) possède un socle inférieur (4) en forme de prisme, avec des surfaces qui, s'étendant dans les plans ou parallèlement aux plans diagonaux du boîtier (1), servent de surfaces de butée (6) pour les modules (8), la plaque de support (5) présentant, sur sa face supérieure, un contour de réception (7) adapté à la surface de base de ce socle (4).

5. Dispositif de raccordement selon l'une des revendications 1 à 4,
**caractérisé en ce que**
les raccords à fiches (10) des contacts électriques (12) ont des extrémités fourchues, ouvertes (13) dans la direction d'insertion et que les contre-contacts (14), sur ou dans le boîtier (1), possèdent des lames de contact (15) dégagées, qui sont disposées chacune parallèlement à l'un des côtés du boîtier, et peuvent être agrippées, de leur côté frontal (16) ou de leur côté longitudinal (17), par les extrémités fourchues (13) des contacts (12).

6. Dispositif de raccordement selon la revendication 5,
**caractérisé en ce que**
les contacts (12) d'un raccord à fiches (10) ou ceux de deux ou de plusieurs raccords à fiches (10) d'un module (8) sont disposés en harpe, parallèlement, les uns à côté des autres, dans un plan, avec des longueurs étagées, et que, de manière appropriée, les contre-contacts (14) sont disposés, sur ou dans le boîtier (1), avec des longueurs étagées à l'inverse, en harpe, parallèlement, les uns à côté des autres, les contacts (12) et les contre-contacts (14) étant agencés selon une disposition imbriquée, dans des plans parallèles, différents, et les lames de contact (15) des contre-contacts (14) étant coudées dans le plan des contacts (12), respectivement des extrémités fourchues (13) de ceux-ci.

7. Dispositif de raccordement selon l'une des revendications 1 à 6,
**caractérisé en ce que**,
pour la transmission de la lumière, les raccords à fiches (11) possèdent au moins un guide d'onde optique (18) qui fait face dans la même position, avec son extrémité frontale émettrice, respectivement réceptrice (19), suivant un angle de 45 degrés par rapport à la direction d'insertion, aussi bien dans une première position de contact que dans une deuxième position de contact inversée, à un système de réception respectivement d'émission (20) installé dans ou sur le boîtier (1) en formant un angle de 45 degrés correspondant.

8. Dispositif de raccordement selon l'une des revendications 2a 7,
**caractérisé en ce que**
les raccords à fiches (10, 11) ou le module (8) au moins prévu présentent, sur le côté opposé au boîtier (1), des organes filetés (23) à filet intérieur (24) accueillant des capuchons (25) à filet extérieur (26), pour le passage et le serrage des conducteurs.

## Claims

1. Connecting device for a number of electrical leads (21) and/or optical fibres (22), more particularly a bus system having a housing (1) of a basic rectangular or square shape and with plug connections (10,11) which can be attached thereto and which are mounted on one of the sides or on opposing sides of the housing (1) and are connected inside the housing by means of corresponding electrical contacts (12-15) or optical junctions (19,20) to electrical, electronic or photoelectric component parts,
**characterised in that**
the plug-in direction of the plug connections (10, 11) is set in the longitudinal direction and in the transverse direction of the housing (1), that the electrical counter contacts (14) on the housing side and/or the optical transmitter and receiver device (20) on the housing side are disposed along a diagonal plane of the housing (1) which is at an angle of 45° to the plug-in direction, that the plug-in connections (10, 11) are located on at least one module (8) and their contacts (12) and/or their transmitting and receiving optical fibre ends (19) are likewise disposed in a direction of a diagonal plane standing at an angle of 45° to their plug-in direction whereby the module (8) with the plug connection (10, 11) can be turned round 90° across the corner on the housing (1) in relation to the plug-in direction and the electrical and optical contacting takes place after the turn round at the same relevant contact sites when the position of the module (8) is rotated 180° about an axis parallel to the plug-in direction.

2. Connecting device according to claim 1,
**characterised in that**
the module (8) and the housing (1) have stop faces (6,9) which bear against one another in the contact position and which run at an angle of 45° upright to the plug-in direction of the plug-in connections (10, 11).

3. Connecting device according to one of claims 1 or 2,
**characterised in that**
the housing (1) is fitted on an under plate (5) between which and the housing (1) one or more modules are held.

4. Connecting device according to claim 3,
**characterised in that**
the housing (1) has a plinth (4) on the underneath in the form of a prism with surfaces running in or parallel to the diagonal planes of the housing (1) to form stop faces (6) for the module (8) whereby the under plate (5) has a socket contour (7) on the top side matching the base face of this plinth (6).

5. Connecting device according to one of claims 1 to 4,
**characterised in that**
the plug connections (10) of the electrical contacts (12) have forked ends (13) open in the plug-in direction and the counter contacts (14) in or on the housing (1) have free-standing contact tongues (15) whereby these are each mounted parallel to one of.the housing sides and can be engaged over their end side (16) or their longitudinal side (17) by the forked ends (13) of the plug connection contacts (12).

6. Connecting device according to claim 5,
**characterised in that**
the contacts (12) of one plug connection (10) or those of two or more plug connections (10) of one module (8) are mounted parallel next to each other in the manner of a harp in one plane with stepped lengths and correspondingly the counter contacts (14) are mounted parallel side by side in the manner of a harp on or in the housing (1) in oppositely stepped length whereby the contacts (12) and the counter contacts (14) lie when joined in different parallel planes next to one another and the contact tongues (15) of the counter contacts (14) are angled into the plane of the contacts (12) and their forked ends (13).

7. Connecting device according to one of claims 1 to 6,
**characterised in that**
the plug connections (11) for the optical transfer have at least one optical fibre (18) leading to the relevant optical junction and which in relation to the plug-in direction opposes at an angle of 45° with its transmitting or receiving end side (19) a receiving or transmitting device (20) installed in or on the housing (1) at a corresponding 45° angle at the same spot both in its first contact position and also.in a second contact position inverted relative thereto.

8. Connecting device according to one of claims 2 to 7,
**characterised in that**
the plug connections (10, 11) or the at least one module (8) on the side remote from the housing (1) have screw attachments (23) with an internal thread (24) for holding screw caps (25) with an external thread (26) for the conductor passage and clamp.
